# EUROPÄISCHE PATENTSCHRIFT

(11) **EP 1 186 453 B1**
(45) Veröffentlichungstag und Bekanntmachung des Hinweises auf die Patenterteilung: **08.01.2003**
(21) Anmeldenummer: 00117869.8
(22) Anmeldetag: 19.08.2000
(51) Int. Cl.: B60J 5/04

(54) **Seitenaufprallträger**
Side intrusion beam
Poutre d'enfoncement latéral

(43) Veröffentlichungstag der Anmeldung: 13.03.2002
(73) Patentinhaber: BENTELER AG, D-33104 Paderborn (DE)
(72) Erfinder: Gehringhoff, Ludger, . Dipl.- Ing., 33106 Paderborn- Sande (DE); Schäfers, Johannes,. Dipl.-Ing., 33178 Borchen (DE)
(74) Vertreter: Ksoll, Peter, Dr.-Ing.

(56) Entgegenhaltungen:
- EP-A- 0 662 053
- EP-A- 0 728 607
- EP-A- 1 002 680
- DE-A- 4 342 038
- GB-A- 1 287 160
- US-A- 5 000 509

## Beschreibung

Die Erfindung betrifft einen Seitenaufprallträger als Verstärkungsbauteil für die Fahrzeugtür eines Kraftfahrzeugs gemäß den in EP 0 662 053 C offenbarten Merkmalen des Oberbegriffs von Anspruch 1.

Seitenaufprallträger dienen vorrangig zum Schutz der PKW-Insassen vor Verletzungen bei einem Seitenaufprall. Sie kommen als Türverstärkungen zum Einsatz. In Abhängigkeit von der Stabilität der Grundkonstruktion sollen sie eine hohe Steifigkeit quer zur Fahrrichtung aufweisen.

Eine Rohrkonstruktion ebenso wie eine Faltkonstruktion eines Seitenaufprallträgers mit trapezförmig flach verbreiterten Endabschnitten gehen aus der EP 0 728 607 A2 hervor. Die EP 0 662 053 C1 offenbart einen Seitenaufprallträger, der auf dem überwiegenden Teil seiner Länge ein im Querschnitt hutförmiges Profil aufweist, dessen Endabschnitte zu den Stirnseiten hin flach ausgebildet sind und sich verbreitern.

Solche Seitenaufprallträger werden meist aus konventionellem Ziehblech gefertigt. Die hutförmigen Profile besitzen den Vorteil, dass sie nur aus einem Teil bestehen und meist leichter als Rohrausführungen sind.

Den vorgenannten Seitenaufprallträgem aus Blechprofilen ist gemein, dass sie flach zu den Enden hin auslaufen, wo sie an das Türinnenblech gefügt werden. Sie versteifen die Türstruktur und absorbieren Energie beim Seitencrash. Ein Schwachpunkt liegt jedoch an den Enden der Seitenaufprallträger, wo sie ausknicken oder ausbeulen können. Diese Tatsache macht sich insbesondere bei einem frontseitigen Aufprall (Frontalcrash) nachteilig bemerkbar.

Der Erfindung liegt daher ausgehend vom Stand der Technik die Aufgabe zugrunde, einen fertigungs- und montagetechnisch vorteilhaften Seitenaufprallträger zu schaffen, bei dem aus einem Frontcrash resultierende Axialkräfte über die A-Säule in die B-Säule geleitet werden.

Die Lösung dieser Aufgabe besteht nach der Erfindung in einem Seitenaufprallträger gemäß den Merkmalen von Patentanspruch 1.

Kernpunkt der Erfindung bildet die Maßnahme, dass die Endabschnitte des Seitenaufprallträgers bis zu den Stirnseiten einen hutförmigen Querschnitt aufweisen. Hierdurch werden die Seitenaufprallträger zum Schutz der Insassen bei einem Frontalcrash zu einer Weiterleitung der Axialkräfte über die A-Säule der Fahrzeugkarosserie durch den Seitenaufprallträger in die B-Säule herangezogen. Deformationen in den Knotenbereichen, also den Anbindungsbereichen des Seitenaufprallträgers zwischen A-Säule und B-Säule in der Fahrzeugtür werden vermieden bzw. reduziert. Auch bei der herstellungsbedingten zueinander versetzten Lage von A-Säule und B-Säule zum Träger erfolgt eine im wesentlichen geradlinige Übertragung der Kräfte von der A-Säule in den Seitenaufprallträger und von dem Seitenaufprallträger zur B-Säule.

Das Hutprofil der Endabschnitte kann sich verbreitern und/oder in der Höhe zunehmen. Die Querschnittsveränderung ist kontinuierlich, linear oder progressiv möglich. Denkbar ist auch eine abgestufte Querschnittsänderung.

Fertigung und Montage des Seitenaufprallträgers sind aufgrund seiner einfachen einteiligen Ausführung rationell durchführbar.

Eine besonders vorteilhafte Ausführungsform ist in einem Seitenaufprallträger gemäß Anspruch 2 zu sehen, bei dem die hutförmigen Endabschnitte in der Höhe und in der Breite erweitert sind. Die Endabschnitte sind trapezoder trichterförmig aufgeweitet. Diese Maßnahme trägt zu einer wirksamen Aufnahme und Weiterleitung der Axialkräfte aus einem Frontcrash bei. Durch die erfindungsgemäß vorgesehene Querschnittsgestaltung ist - wie gesagt - eine außermittige Krafteinleitung von der A-Säule in die Türstruktur möglich. Deformationen an der vorderen Türstruktur werden vermieden, so dass auch ein leichtes Öffnen der Tür nach einem Crash sichergestellt ist. Die Fahrgastzelle ist insgesamt steifer und ihre Sicherheit erhöht.

Vorzugsweise weisen die Längskanten des Profils quer abstehende Seitenflansche auf (Anspruch 3). Die Seitenflansche können über die Endabschnitte bis zu den Stirnseiten hin verlaufen, wie dies Anspruch 4 vorsieht. Durch die Seitenflansche wird die Biegesteifigkeit des Seitenaufprallträgers erhöht.

Zur Festlegung des Seitenaufprallträgers in der Fahrzeugtür können an den Endabschnitten nach Anspruch 5 Anbindungsflansche vorgesehen sein. Vorzugsweise sind kurze Anbindungsflansche stirnseitig am Steg des Seitenaufprallträgers sowie an den Seitenflanschen vorgesehen.

Die Einbaulage des Seitenaufprallträgers ist nach den Merkmalen von Anspruch 6 bevorzugt mit der offenen Seite zur Außenhaut der Fahrzeugtür hin gerichtet. Der Seitenaufprallträger besitzt eine hohe Biegesteifigkeit, versteift die Türstruktur und absorbiert Energie beim Seitencrash. Erfindungsgemäß werden zudem Axialkräfte aus einem Frontcrash über die A-Säule durch den Seitenaufprallträger laufend in die B-Säule geleitet.

Nach den Merkmalen von Anspruch 7 ist vorgesehen, dass der Seitenaufprallträger mit der Fahrzeugtür verklebt ist. Vorzugsweise erfolgt dies über die Seitenflansche. Hierdurch wird die Knicksteifigkeit des Seitenaufprallträgers und die Beulsteifigkeit der Tür erhöht.

Der erfindungsgemäße Seitenaufprallträger kann aus höchstfesten warmoder kaltformbaren Stählen oder aber auch aus Aluminium und ähnlichen Leichtmetallen bestehen. Er ist vorzugsweise einteilig ausgeführt. Zusätzliche Halter sind nicht erforderlich. Dies trägt zur Gewichtsreduzierung bei. Die Montage in der Türstruktur ist einfach. Sie kann beispielsweise über eine Schweißpunktverbindung an den Anbindungsflanschen erfolgen. Grundsätzlich ist auch eine reine klebetechnische Verbindung möglich.

Die Erfindung ist nachfolgend anhand eines in den Zeichnungen dargestellten Seitenaufprallträgers beispielhalf beschrieben. Es zeigen:
- Figur 1: in perspektivischer Darstellungsweise einen Seitenaufprallträger;
- Figur 2: technisch vereinfacht den Seitenaufprallträger im vertikalen Querschnitt und
- Figur 3: in schematischer Darstellungsweise einen horizontalen Längsschnitt durch den Seitenaufprallträger in der Einbaulage zwischen A-Säule und B-Säule.

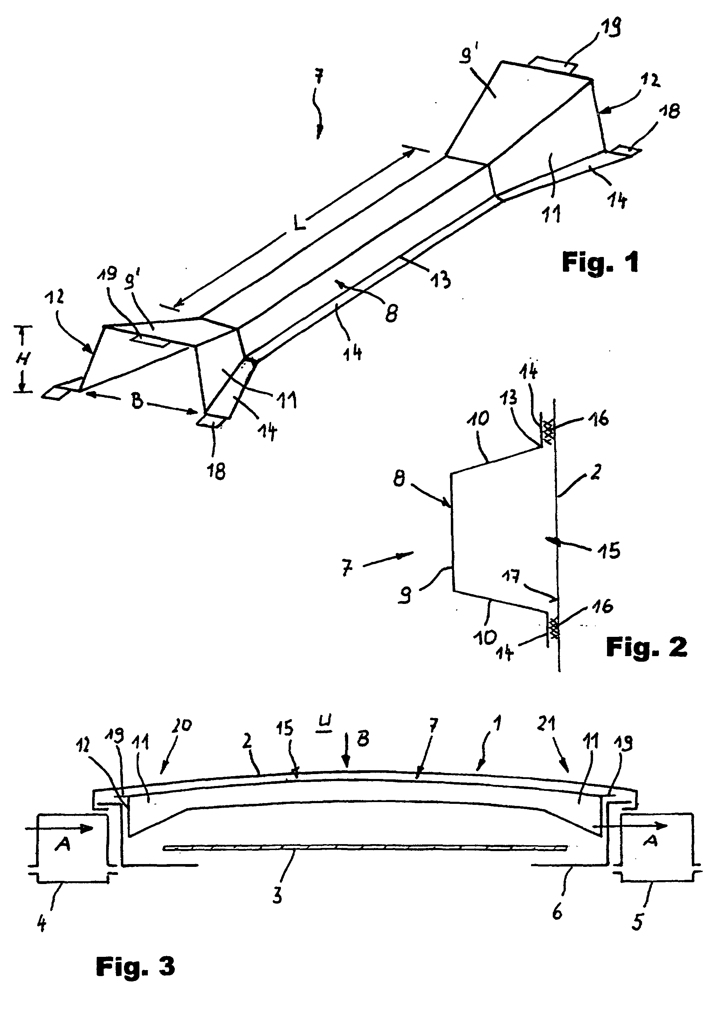

Mit 1 ist in der Figur 3 im Schema eine Fahrzeugtür für einen Personenkraftwagen (PKW) bezeichnet. Die Außenhaut 2 der Fahrzeugtür 1 ist in Fahrzeuglängsrichtung leicht zur Umgebung U hin nach außen gewölbt.

Im Abstand zur Außenhaut 2 ist in die Fahrzeugtür 1 eine heb- und senkbare Scheibe 3 eingegliedert. Im Schema technisch vereinfacht sind ferner die zum Fahrzeugrahmen gehörende A-Säule 4 und die B-Säule 5 dargestellt. Auch das Türinnenblech 6 ist lediglich angedeutet.

In der Fahrzeugtür 1 ist zwischen der Außenhaut 2 und der Scheibe 3 ein Seitenaufprallträger 7 eingegliedert. Der Seitenaufprallträger 7 besteht aus Metallblech und dient primär zur Absorption von Energie bei einem Seitencrash. Die Biegebelastung ist in der Figur 3 durch den Pfeil B verdeutlicht. Wie anhand der Figur 1 deutlich wird, weist der Seitenaufprallträger 7 über seinen Längenabschnitt L ein hutförmiges Profil 8 auf mit einem Steg 9 und zwei seitlichen Schenkeln 10 (siehe auch Figur 2). An das Profil 8 gliedern sich einstückig Endabschnitte 11 an, die bis zu den Stirnseiten 12 des Seitenaufprallträgers 7 ebenfalls einen hutförmigen Querschnitt besitzen. Der Querschnitt der Endabschnitte 11 erweitert sich vom Profil 8 ausgehend sowohl in der Höhe H als auch in der Breite B.

An den Längskanten 13 des Profils 8 stehen quer Seitenflansche 14 ab. Diese verlaufen über die Endabschnitte 11 bis zu den Stirnseiten 12 des Seitenaufprallträgers 7.

Die Figuren 2 und 3 lassen erkennen, dass der Seitenaufprallträger 7 mit seiner offenen Seite 15 zur Außenhaut 2 der Fahrzeugtür 1 gerichtet ist. Durch eine Verklebung 16 des Seitenaufprallträgers 7 entlang der Seitenflansche 14 mit der Innenseite 17 der Außenhaut 2, wie sie in der Figur 2 dargestellt ist, kann die Knicksteifigkeit des Seitenaufprallträgers 7 ebenso wie die Beulsteifigkeit der Fahrzeugtür 1 bzw. der Außenhaut 2 erhöht werden. Die klebetechnische Verbindung von Seitenaufprallträger 7 und Außenhaut 2 ist in der Figur 3 nicht maßstäblich dargestellt.

An den Endabschnitten 11 sind kurze Anbindungsflansche 18, 19 vorgesehen, und zwar stirnseitig der Seitenflansche 14 sowie stirnseitig des Stegs 9' der Endabschnitte 11. Die Anbindungsflansche 18, 19 dienen zur Festlegung des Seitenaufprallträgers 7 in der Fahrzeugtür 1. Dies kann beispielsweise durch eine Punktschweißung erfolgen.

Durch die trapezförmige Aufweitung der Endabschnitte 11 des Seitenaufprallträgers 7 ausgehend vom mittleren Profil 8 werden aus einem Frontcrash resultierende Axialkräfte (Pfeil A) über die A-Säule 4 durch den Seitenaufprallträger 7 laufend in die B-Säule 5 geleitet. Anhand der Figur 3 wird deutlich, dass auch eine außermittige Krafteinleitung (Pfeil A) von der A-Säule 4 in die Türstruktur möglich ist. Deformationen in den Knotenbereichen 20 bzw. 21 zwischen A-Säule 4 bzw. B-Säule 5 und der Türstruktur werden durch die im Querschnitt erweiterten Endabschnitte 11 vermieden. Insbesondere die vordere Türstruktur wird nicht bzw. weniger stark deformiert, so dass die Möglichkeit, eine Fahrzeugtür 1 nach einem Crash zu öffnen, erleichtert ist.

### Bezugszeichenaufstellung

- 1 -: Fahrzeugteil
- 2 -: Außenhaut
- 3 -: Scheibe
- 4 -: A- Säule
- 5 -: B-Säule
- 6 -: Türinnenblech
- 7 -: Seitenaufprallträger
- 8 -: Profil
- 9 -: Steg
9' - Steg
- 10-: Schenkel
- 11 -: Endabschnitt
- 12 -: Stirnseite
- 13 -: Längskante
- 14 -: Seitenflansch
- 15 -: offene Seite v. 7
- 16 -: Verklebung
- 17 -: Innenseite v. 7
- 18 -: Anbindungsflansch
- 19 -: Anbindungsflansch
- 20 -: Knotenbereich
- 21 -: Knotenbereich

- A -: Pfeil Axialkraft
- B -: Pfeil Biegebelastung
- B -: Breite v. 11
- H -: Höhe v. 11
- L -: Länge v. 8
- U -: Umgebung

## Patentansprüche

1. Seitenaufprallträger zur Eingliederung in die Fahrzeugtür (1) eines Kraftfahrzeugs, welcher auf mindestens dem überwiegenden Teil seiner Länge ein im Querschnitt hutförmiges Profil (8) aus Metallblech mit einem Steg (9) und zwei Schenkeln (10) aufweist, dessen Endabschnitte (11) zu den Stirnseiten (12) hin verbreitert ausgebildet sind, **dadurch gekennzeichnet, dass** die Endabschnitte (11) bis zu den Stirnseiten (12) einen hutförmigen Querschnitt aufweisen.

2. Seitenaufprallträger nach Patentanspruch 1, **dadurch gekennzeichnet, dass** die hutförmigen Endabschnitte (11) in der Höhe (H) und der Breite (B) erweitert sind.

3. Seitenaufprallträger nach Patentanspruch 1 oder 2, **dadurch gekennzeichnet, dass** an den Längskanten (13) des Profils (8) quer abstehende Seitenflansche (14) vorgesehen sind.

4. Seitenaufprallträger nach Patentanspruch 3, **dadurch gekennzeichnet, dass** die Seitenflansche (14) über die Endabschnitte (11) bis zu den Stirnseiten (12) verlaufen.

5. Seitenaufprallträger nach einem der Patentansprüche 1 bis 4, **dadurch gekennzeichnet, dass** die Endabschnitte (11) Anbindungsflansche (18, 19) aufweisen.

6. Seitenaufprallträger nach einem der Patentansprüche 1 bis 5, **dadurch gekennzeichnet, dass** seine offenen Seite (15) zur Außenhaut (2) der Fahrzeugtür (1) gerichtet ist.

7. Seitenaufprallträger nach einem der Patentansprüche 1 bis 6, **dadurch gekennzeichnet, dass** er mit der Fahrzeugtür (1) verklebt ist.

## Claims

1. A side impact member for incorporation in the vehicle door (1) of a motor vehicle, said member having a hat-shaped profile (8) in cross-section over at least the major part of its length, and being made of sheet metal with a web (9) and two limbs (10), the end portions (11) of which widen out towards the end faces (12), **characterised in that** the end portions (11) have a hat-shaped cross-section as far as the end faces (12).

2. A side impact member according to claim 1, **characterised in that** the hat-shaped end portions (11) widen out in height (H) and in width (B).

3. A side impact member according to claim 1 or 2, **characterised in that** transversely projecting side flanges (14) are provided on the longitudinal edges (13) of the profile (8).

4. A side impact member according to claim 3, **characterised in that** the side flanges (14) extend over the end portions (11) as far as the end faces (12).

5. A side impact member according to any one of claims 1 to 4, **characterised in that** the end portions (11) have attachment flanges (18,19).

6. A side impact member according to any one of claims 1 to 5, **characterised in that** its open side (15) faces the outer skin (2) of the vehicle door (1).

7. A side impact member according to any one of claims 1 to 6, **characterised in that** it is stuck to the vehicle door (1).

## Revendications

1. Poutre d'enfoncement latéral destinée à être incorporée dans la portière (1) d'un véhicule automobile, laquelle présente sur au moins la plus grande partie de sa longueur un profil en forme de chapeau (8) en section transversale, en tôle métallique avec une âme (9) et deux ailes (10), dont les sections d'extrémité (11) vont en s'élargissant vers les côtés frontaux (12), **caractérisée en ce que** les sections d'extrémité (11) présentent une section transversale en forme de chapeau jusqu'aux côtés frontaux (12).

2. Poutre d'enfoncement latéral selon la revendication 1, **caractérisée en ce que** les sections d'extrémité en forme de chapeau (11) sont élargies dans la hauteur (H) et dans la largeur (B).

3. Poutre d'enfoncement latéral selon la revendication 1 ou 2, **caractérisée en ce que** des flasques latéraux (14) faisant saillie obliquement sont prévus sur les bords longitudinaux (13) du profil (8).

4. Poutre d'enfoncement latéral selon la revendication 3, **caractérisée en ce que** les flasques latéraux (14) s'étendent sur les sections d'extrémité (11) jusqu'aux côtés frontaux (12).

5. Poutre d'enfoncement latéral selon l'une des revendications 1 à 4, **caractérisée en ce que** les sections d'extrémité (11) présentent des flasques de raccordement (18,19).

6. Poutre d'enfoncement latéral selon l'une des revendication 1 à 5, **caractérisée en ce que** son côté ouvert (15) est dirigé vers le bordé extérieur (2) de la portière du véhicule automobile (1).

7. Poutre d'enfoncement latéral selon l'une des revendications 1 à 6, **caractérisée en ce qu'**elle est collée à la portière du véhicule automobile (1).
